# EUROPÄISCHE PATENTANMELDUNG

(11) **EP 0 949 484 A1**
(43) Veröffentlichungstag der Anmeldung: **13.10.1999**
(21) Anmeldenummer: 99106574.9
(22) Anmeldetag: 31.03.1999
(51) Int. Cl.: G01F 1/24

(54) **Durchflussmessgerät**

(30) Priorität: 07.04.1998 DE 19815463
(71) Anmelder: SPANNER-POLLUX GmbH, D-67063 Ludwigshafen (DE)
(72) Erfinder: Hartl,Michael, 67112 Mutterstadt (DE)
(74) Vertreter: Patentanwälte Möll und Bitterich

(57) **Zusammenfassung**

Gegenstand der Erfindung ist ein Durchflussmessgerät für Fluide. Dieses umfasst ein Gehäuse (4, 8) mit einer Zuflussöffnung (15) und einer Abflussöffnung (16). Im Inneren des Gehäuses (4, 8) ist hinter der Zuflussöffnung (15) ein vom Fluid beaufschlagter Messkörper (7) angeordnet. Der Messkörper (7) wirkt auf einen Piezo-Wandler, der als elektromechanischer Kraftsensor (1) wirkt. Zwischen Kraftsensor (1) und Messkörper (7) befindet sich eine Feder (6).

## Beschreibung

Die Erfindung betrifft Durchflußmeßgeräte für Fluide gemäß dem Oberbegriff des Anspruchs 1.

Zur Messung des Durchflusses eines Fluids, d. h. eines Gases oder einer Flüssigkeit, gibt es eine Vielzahl von Meßprinzipien und Meßgeräten. Bekannt sind Durchflußmeßgeräte mit Flügelrad oder Turbine, die von dem strömenden Medium in Drehung versetzt werden. Bekannt sind ferner Meßgeräte, die die Strömungsgeschwindigkeit mit Hilfe von Staurohren oder Hitzdrahtsonden bestimmen. Schließlich gibt es Meßgeräte, bei denen die Strömungsgeschwindigkeit über die Widerstandskraft ermittelt wird, die in Anströmrichtung auf einen umströmten Meßkörper wirkt. Die vorliegende Erfindung betrifft Meßgeräte vom letztgenannten Typ.

Aus der EP 0 084 225 B ist ein Strömungssensor bekannt, der mit einer variablen Drossel arbeitet. Die Drossel wird gebildet durch eine kreisförmige, ebene Ventilplatte in einem kegelförmigen Ventilsitz. Im Ruhezustand, d. h. ohne Fluidströmung, verschließt die Ventilplatte den Ventilsitz. Mit zunehmendem Fluiddruck auf der Eingangsseite entsprechend zunehmender Strömungsgeschwindigkeit wird die Ventilplatte gegen die Kraft einer Feder mehr und mehr vom Ventilsitz abgehoben. Der Abstand zwischen Ventilplatte und Ventilsitz wird von einem elektromagnetischen Positionssensor gemessen; aus dem Meßwert wird dann der Durchfluß errechnet.

Um den Meßbereich dieser Vorrichtung zu kleinen Durchflüssen hin zu erweitern, ist eine Zusatzeinrichtung vorgesehen, bestehend aus einem Bypaß mit definierter Drosselstelle und einem gegen eine weitere Feder beweglichen Kolben mit eigenem Positionssensor. Diese Hilfseinheit mißt die Strömungsmenge auf dem Umweg über den Druckabfall, der im Bypaß entsteht.

Der vorliegenden Erfindung liegt die Aufgabe zugrunde, ein Meßgerät der eingangs genannten Art anzugeben, welches einfach aufgebaut ist und bei Bedarf auch mit einem weiten Meßbereich arbeitet.

Diese Aufgabe wird gelöst durch ein Durchflußmeßgerät mit den Merkmalen des Anspruchs 1.

Piezowandler zeichnen sich durch eine lineare Meßkurve aus und sind besonders störungsarm. Sie erfahren jedoch auch bei Anwendung der maximalen Kraft nur eine minimale Auslenkung. Für eine feinfühlige Messung sollte der Meßkörper jedoch einen großen Hub durchführen können. Diese beiden gegensätzlichen Forderungen werden in einfacher Weise mit Hilfe einer zwischen Meßkörper und Piezowandler eingefügten Feder erfüllt.

Gemäß einer bevorzugten Weiterbildung befindet sich zwischen Piezowandler und Feder ein Stößel, wobei die Federkonstante der Feder geringer ist als die Federkonstante des Piezowandlers. Dadurch legt sich der Meßkörper bei einer bestimmten Auslenkung gegen den Stößel an; der Stößel begrenzt somit den Federweg. Gleichzeitig gibt jedoch der Piezowandler ein elektrisches Signal ab, welches der auf den Meßkörper wirkenden Widerstandskraft proportional ist. Auf diese Weise läßt sich eine besonders feinfühlige Messung der kleinen Durchflüsse mit einer Messung bis zu hohen Durchflußwerten kombinieren, und zwar mit nur einem einzigen Meßkörper.

Gemäß einer Ausgestaltung der Erfindung ist der Meßkörper ein Drehkörper, z. B. eine Halbkugel. Die tatsächliche Form des Meßkörpers wird der Durchschnittsfachmann in Abhängigkeit von dem Meßfluid und dem Meßbereich wählen.

Gemäß einer Weiterbildung der Erfindung ist der Meßkörper mittels Rippen in einem Strömungskanal geführt. Der Strömungskanal kann rein zylindrisch sein für eine optimale Führung des Meßkörpers. Es ist jedoch auch möglich, den Führungskanal konisch zu gestalten, um die auf den Meßkörper wirkende Widerstandskraft in Abhängigkeit von der Position des Meßkörpers zu verändern.

Gemäß einer Weiterbildung der Erfindung ist der Piezowandler als Biegebalken ausgebildet und einseitig eingespannt. Eine solche Ausführungsform benötigt nur relativ kleine Kräfte zur Erzeugung eines großen Ausgangssignals.

Gemäß einer bevorzugten Ausgestaltung der Erfindung befindet sich zwischen Zuflußöffnung und Meßkammer ein Einströmtrichter. Dieser konzentriert die Strömung und richtet sie gezielt auf den Meßkörper.

Gemäß einer Weiterbildung hierzu verschließt der Meßkörper im Ruhezustand den Einströmtrichter. Dabei verhindert der Meßkörper ein Zurückfließen des Fluids, beispielsweise aufgrund von Schwingungen der Fluidsäule, und somit eine fehlerhafte Messung.

Gemäß einer Ausgestaltung der Erfindung ist der Zuflußöffnung ein Sieb nachgeordnet. Dies verhindert mögliche Funktionsstörungen durch Grobschmutz.

Einen besonders kompakten Aufbau erhält man, wenn die Meßelektronik und gegebenenfalls die Meßanzeige in das Gehäuse integriert sind.

Gemäß einer vorteilhaften Ausgestaltung der Erfindung umfaßt das Gehäuse einen einseitig offenen Außenzylinder, dessen Boden die Zufluß- oder Abflußöffnung aufweist. Des weiteren ist vorgesehen ein Einsatz mit den meßfunktionalen Elementen und ein Verschlußring, der die Abfluß- oder Zuflußöffnung aufweist.

Dieser Verschlußring verschließt den Außenzylinder und fixiert den Einsatz, gegebenenfalls auch den Einströmtrichter und/oder das Sieb.

Anhand der Zeichnung soll die Erfindung in Form eines Ausführungsbeispiels näher erläutert werden. Es zeigen
- Fig. 1: einen Längsschnitt durch ein Durchflußmeßgerät und
- Fig. 2: einen Querschnitt entlang der Linie II-II in Fig. 1.

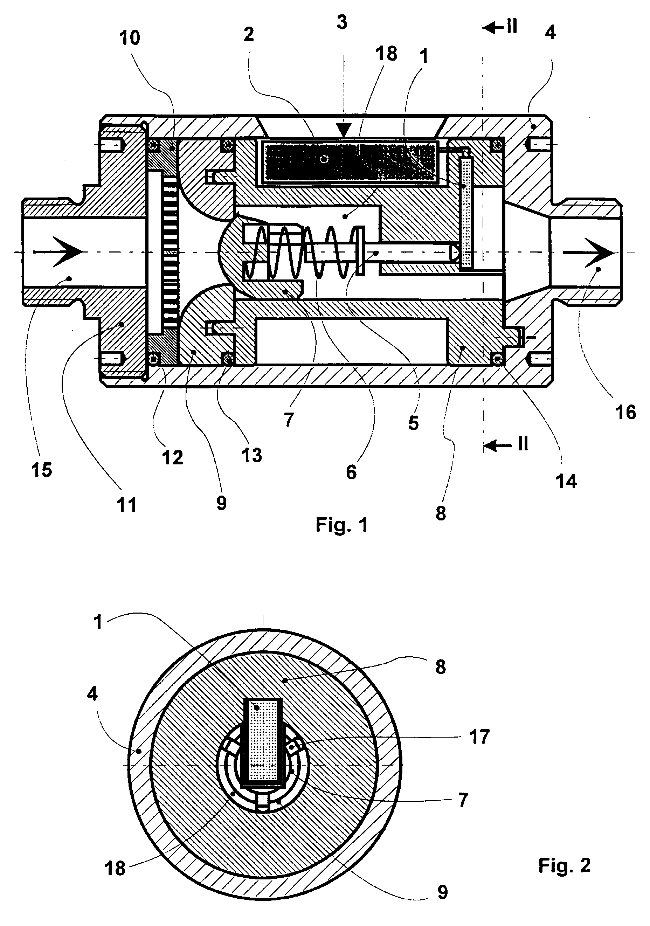

Fig. 1 als Längsschnitt und Fig. 2 als Querschnitt zeigen ein Durchflußmeßgerät für Fluide. Dieses besitzt ein Gehäuse in Form eines Außenzylinders 4, dessen Boden eine Abflußöffnung 16 aufweist. Im Außenzylinder 4 befindet sich ein Einsatz 8, der alle funktionswesentlichen Elemente umfaßt. Verschlossen wird der Außenzylinder 4 durch einen Verschlußring 11, der eine Zuflußöffnung 15 aufweist. O-Ringe 12, 13, 14 sorgen für die nötige Abdichtung.

Dem Verschlußring 11 bzw. dessen Zuflußöffnung 15 sind ein Sieb 10, welches den Grobschmutz abhält, und ein Einströmtrichter 9 nachgeordnet. Der Einsatz 8 besitzt einen Strömungskanal 18, in dem ein Meßkörper 7 mit Hilfe von an seinem Umfang verteilten Rippen 17 geführt ist. Der Meßkörper 7 wird im Ruhezustand, d. h. wenn keine Fluidströmung gegeben ist, gegen den Einströmtrichter 9 gedrückt und verschließt so die Öffnung.

Die Feder 6 stützt sich rückseitig an einem Stößel 5 ab, der im Einsatz 8 längsbeweglich geführt ist. Das Ende des Stößels 5 liegt an einem als Kraftsensor dienenden Piezowandler 1 an. Dieser ist als einseitig eingespannter Biegebalken ausgebildet.

Das vom Piezowandler 1 erzeugte elektrische Signal wird in einer Meßelektronik 2 in einen entsprechenden Durchfluß umgerechnet und kann auf einer LCD-Anzeige 3 direkt angezeigt werden.

Das erfindungsgemäße Durchflußmeßgerät arbeitet wie folgt.

Solange durch die Zuflußöffnung 15 kein Fluid einströmt, verschließt der Meßkörper 7 den Einströmtrichter 9. Die Feder 6 unterstützt den Verschluß durch eine geringe Vorspannung. Das Meßsignal, das der Piezowandler 1 an die Meßelektronik 2 abgibt, wird auf der Anzeige 3 als Null angezeigt. Gleichzeitig verhindert der Meßkörper 7 ein Zurückfließen des Fluids, beispielsweise aufgrund einer schwingenden Fluidsäule, und somit eine fehlerhafte Durchflußanzeige.

Sobald in die Zuflußöffnung 15 Fluid einströmt, wird der Meßkörper 7 durch den Volumenstrom in Fließrichtung gegen die Kraft der Feder 6 verschoben. Die dabei entstehende Kraft ist abhängig vom Widerstandsbeiwert c_{w}des Meßkörpers 7. Damit wird eine zur Strömungsgeschwindigkeit proportionale Kraft über die Feder 6 und den Stößel 5 auf den Piezowandler 1 ausgeübt. Je größer die Kraft am Piezowandler 1 ist, desto stärker verformt er sich und desto größer ist das Meßsignal.

Ist die Federkonstante der Feder 6 geringer als die Federkonstante des Piezowandlers 1, so legt sich der Meßkörper 7 ab einer bestimmten Kraft direkt an den Stößel 5 an. Damit bestimmt jetzt allein die Federkonstante des Piezowandlers 1 die weitere Bewegung des Meßkörpers 7. Das vom Piezowandler 1 abgegebene Meßsignal ist jedoch nach wie vor direkt proportional zu der auf den Meßkörper 7 wirkenden Widerstandskraft der Fluidströmung.

Es versteht sich, daß Meßelektronik 2 und Anzeige 3 nicht nur den aktuellen Durchflußwert anzeigen können, sondern daß die Durchflußwerte integriert, gespeichert und als Gesamtverbrauch angezeigt werden können.

Wesentliche Vorteile des erfindungsgemäßen Durchflußmeßgerätes sind die beliebige Einbaulage, das geringe Gewicht, die minimale Anzahl der Bauteile insbesondere der bewegten Bauteile, die minimale Anzahl an Verschleißteilen, die Eignung für beliebige Fluide, auch für Fluide mit erhöhter Temperatur, sowie der in der Fertigung erreichbare hohe Automatisierungsgrad.

## Patentansprüche

1. Durchflußmeßgerät für Fluide, im wesentlichen umfassend
- ein Gehäuse (4, 8) mit
-- einer Zuflußöffnung (15)
-- und einer Abflußöffnung (16),
- einen vom Fluid beaufschlagten Meßkörper (7) hinter der Zuflußöffnung (15)
- und einen elektro-mechanischen Kraftsensor (1), auf den der Meßkörper (7) wirkt,
gekennzeichnet durch die Merkmale:
- der Kraftsensor (1) ist ein Piezowandler,
- zwischen Kraftsensor (1) und Meßkörper (7) befindet sich eine Feder (6).

2. Durchflußmeßgerät nach Anspruch 1, gekennzeichnet durch die Merkmale:
- zwischen Piezowandler (1) und Feder (6) befindet sich ein Stößel (5),
- die Federkonstante der Feder (6) ist geringer als die des Piezowandlers (1),
- der Stößel (5) begrenzt den Federweg.

3. Durchflußmeßgerät nach Anspruch 1 oder 2, gekennzeichnet durch das Merkmal:
- der Meßkörper (7) ist ein Drehkörper, z. B. eine Halbkugel.

4. Durchflußmeßgerät nach einem der Ansprüche 1 bis 3, gekennzeichnet durch das Merkmal:
- der Meßkörper (7) ist mittels Rippen (17) in einem Strömungskanal (18) geführt.

5. Durchflußmeßgerät nach einem der Ansprüche 1 bis 4, gekennzeichnet durch die Merkmale:
- der Piezowandler (1) ist
-- als Biegebalken ausgebildet
-- und einseitig eingespannt.

6. Durchflußmeßgerät nach einem der Ansprüche 1 bis 5, gekennzeichnet durch das Merkmal:
- zwischen Zuflußöffnung (15) und Meßkörper (7) befindet sich ein Einströmtrichter (9).

7. Durchflußmeßgerät nach Anspruch 6, gekennzeichnet durch das Merkmal:
- der Meßkörper (7) verschließt im Ruhezustand den Einströmtrichter (9).

8. Durchflußmeßgerät nach einem der Ansprüche 1 bis 7, gekennzeichnet durch das Merkmal:
- der Zuflußöffnung (15) ist ein Sieb (10) nachgeordnet.

9. Durchflußmeßgerät nach einem der Ansprüche 1 bis 8, gekennzeichnet durch das Merkmal:
- in das Gehäuse (4, 8) ist eine Meßelektronik (2) und gegebenenfalls eine Meß-Anzeige (3) integriert.

10. Durchflußmeßgerät nach einem der Ansprüche 1 bis 9, gekennzeichnet durch das Merkmal:
- das Gehäuse umfaßt
-- einen einseitig offenen Außenzylinder (4) mit der Zufluß- oder Abflußöffnung (15, 16) im Boden,
-- einen Einsatz (8) mit den meßfunktionalen Elementen (1, 2, 3, 5, 6, 7)
-- und einen Verschlußring (11) mit der Abfluß- oder Zuflußöffnung (16, 15),
- der Verschlußring (11)
-- verschließt den Außenzylinder (4)
-- und fixiert den Einsatz (8); gegebenenfalls den Einströmtrichter (9) und gegebenenfalls das Sieb (10).
